# FASCICULE DE BREVET EUROPEEN

(11) **EP 1 899 065 B1**
(45) Date de publication et mention de la délivrance du brevet: **27.08.2008**
(21) Numéro de dépôt: 06778733.3
(22) Date de dépôt: 30.06.2006
(51) Int. Cl.: B01L 3/02

(54) **DISPOSITIF DE PIPETAGE AUTOMATIQUE PERMETTANT DE S'ASSURER DE LA TRACABILITE DE L'ANALYSE REALISEE**
VERFAHREN ZUM AUTOMATISCHEN PIPETTIEREN ZUM BESTIMMUNG DER RÜCKVERFOLGBARKEIT EINER DURCHGEFÜHRTEN ANALYSE
METHOD FOR AUTOMATICALLY PIPETING FOR ASCERTAINING THE TRACEABILITY OF A PERFORMED ANALYSIS

(30) Priorité: 01.07.2005 FR 0552010
(43) Date de publication de la demande: 19.03.2008
(73) Titulaire: BIOMERIEUX, 69280 Marcy-L'Etoile (FR)
(72) Inventeur: DECAUX, Dominique, F-69630 Chaponost (FR); LIMON, Bernard, F-01250 Rignat (FR); PAULHET, Frédéric, F-1150 Blyes (FR)
(74) Mandataire: Sprugnoli, Claude Louis Victor
(86) Numéro de dépôt international: PCT/FR2006/001543
(87) Numéro de publication internationale: WO 2007/003780

(56) Documents cités:
- WO-A-20/04052543
- WO-A-20/05121780
- DE-A1- 19 911 397
- FR-A- 2 862 890
- US-A- 4 678 894

## Description

Le domaine technique de la présente invention est celui des dispositifs de pipetage ou pipettes automatiques. Plus particulièrement, la présente invention concerne une pipette automatique, du type de celles utilisées dans les analyses biologiques, comportant des moyens intégrés destinés à sécuriser le transfert des échantillons entre différents contenants et assurer la traçabilité desdites analyses.

Le domaine du diagnostic, en particulier du diagnostic médical, est en perpétuelle évolution tant au niveau de la modernisation des technologies, que des contraintes qui sont imposées aux laboratoires en terme de transparence. S'il est vrai que cette modernisation a une influence directe et positive sur la transparence, notamment en limitant l'intervention de l'homme, force est de constater que cette dernière s'avère toujours nécessaire. En effet, si les protocoles des analyses biologiques sont de plus en plus automatisés, il n'en demeure pas moins que l'homme doit intervenir au moins pour dispenser les échantillons dans les appareils d'analyse. Cette étape indispensable peut constituer une source d'erreurs non négligeable.

En effet, les automates réalisant généralement les analyses sur plusieurs échantillons en simultané, il peut arriver que la personne manipulant les échantillons pour les dispenser dans l'appareil, intervertisse ces derniers. Il peut également arriver que le technicien manipulateur n'affecte pas le bon réactif d'analyse au bon échantillon. Ainsi, il peut arriver que le test réalisé sur l'échantillon ne soit pas celui demandé initialement.

Ceci entraîne un risque important d'erreur dans les résultats ; ce qui peut avoir des conséquences dramatiques pour les patients.

Un autre inconvénient inhérent à ces étapes de manipulation est que lorsque le technicien manipule les échantillons en vue d'une analyse, il ne dispose pas de processus de contrôle et de validation des manipulations réalisées. Il en résulte que si le manipulateur fait une erreur, il ne dispose d'aucun moyen pour s'en rendre compte.

Des systèmes d'identification des échantillons ont été mis en place. C'est le cas par exemple des systèmes à code-barres. Concrètement, un code d'identification est octroyé à chaque nouvel échantillon lors de sa prise en charge dans le laboratoire. Une étiquette code-barres est généralement collée sur le contenant de l'échantillon. Le code-barres est ensuite lu par le technicien au moment de la manipulation de l'échantillon, à fin d'identification de celui-ci.

Toutefois, le risque d'erreur demeure, malgré ce système d'identification. En effet, le technicien n'est pas à l'abri de placer l'échantillon dans un mauvais réceptacle de l'appareil et ce, bien que l'échantillon ait été correctement identifié par lecture du code-barres.

Il s'ensuit que, en dehors des opérations réalisées directement par l'automate, il n'existe pas de moyens de contrôler et valider les différentes opérations manuelles réalisées par la personne en charge de l'analyse, et ce a fortiori lorsqu'elles se succèdent, telles que la réalisation de dilutions ou d'aliquotes.

Une autre source importante d'erreurs, lors de la manipulation des échantillons, peut être liée aux volumes prélevés. En effet, comme cela a déjà été évoqué ci-dessus, il n'est pas rare d'être obligé de réaliser des dilutions ou des aliquotes des échantillons. Pour ce faire, il faut prélever un volume déterminé desdits échantillons. Si sur les dispositifs de pipetage utilisés aujourd'hui, il est généralement possible de régler préalablement le volume à prélever, il n'en demeure pas moins un risque que le manipulateur fasse une erreur lors de la détermination du volume à prélever. Si une telle erreur se produit, les résultats obtenus seront faussés, avec les conséquences que l'on connaît.

Il est donc important de pouvoir également contrôler les volumes prélevés lors des opérations de dilution ou d'aliquotage et de pouvoir valider ces volumes ou, au moins, de pouvoir enregistrer l'information sur les volumes prélevés, à des fins de traçabilité.

Il ressort de cet état des lieux qu'il n'existe pas, à ce jour, de système manuel de pipetage d'échantillons qui permette de contrôler l'origine de l'échantillon prélevé, d'identifier le contenant de destination dudit échantillon, de valider les différentes étapes de pipetage par autorisation ou interdiction du prélèvement et/ou de la dispense. Il n'existe pas non plus de système manuel de pipetage d'échantillons permettant de gérer de manière automatique les volumes de liquides (échantillons, tampons ou réactifs) à prélever en fonction du type d'analyse réalisée.

Eu égard aux problèmes soulevés par l'état de la technique considéré ci-dessus, un des objectifs essentiels de la présente invention est de fournir un dispositif de pipetage automatique d'un échantillon, utilisable par un manipulateur, permettant de réaliser une traçabilité complète de l'analyse réalisée, par enregistrement des données liées aux différents contenants recevant l'échantillon, lors des opérations de pipetage.

Un autre objectif essentiel de la présente invention est de fournir un dispositif de pipetage automatique d'un échantillon, utilisable par un manipulateur, apte à vérifier et valider les étapes de pipetage.

Un autre objectif de la présente invention est de fournir un dispositif de pipetage automatique d'un échantillon, utilisable par un manipulateur, apte à assister ce dernier durant les étapes de pipetage, notamment en lui indiquant ou en pré-réglant le volume des liquides (échantillons, tampons et/ou réactifs) à pipeter, en fonction de l'analyse à réaliser.

Un autre objectif de la présente invention est de fournir un dispositif de pipetage automatique d'un échantillon apte à communiquer avec un automate d'analyse.

Ces objectifs, parmi d'autres, sont atteints par la présente invention qui concerne en premier lieu, un dispositif de pipetage automatique d'un échantillon liquide, comportant :
a) au moins un moyen de prélèvement - dispense de l'échantillon liquide;
b) au moins un compartiment de réception de l'échantillon liquide, destiné à recevoir tout ou partie de l'échantillon liquide prélevé par ledit moyen de prélèvement - dispense ;
c) au moins un moyen d'acquisition de données ;
d) au moins un moyen de traitement des données, intégré dans ledit dispositif de pipetage et/ou délocalisé, apte à traiter les données acquises par le moyen d'acquisition de données ;
e) au moins un moyen de communication entre le dispositif de pipetage et un dispositif de restitution des données, ledit moyen de communication étant apte à transférer les données entre ledit moyen d'acquisition de données et ledit moyen de traitement des données, lorsque ce dernier est délocalisé ; et
f) au moins un moyen d'alimentation en énergie ;
le moyen d'acquisition de données étant un moyen d'identification de l'échantillon liquide et/ou du ou des contenant(s) destiné(s) à recevoir tout ou partie dudit échantillon liquide.

Par prélèvement, on entend toute opération consistant à aspirer tout ou partie d'un échantillon contenu dans un contenant source, à l'aide du dispositif de pipetage selon l'invention.

Par dispense, on entend toute opération consistant à expulser tout ou partie du volume de l'échantillon contenu dans le compartiment de réception du dispositif de pipetage, une fois prélevé.

Par moyen d'identification, on entend tout moyen apte à permettre de déterminer la provenance et/ou la destination d'un échantillon ou d'identifier le contenant destiné à recevoir ledit échantillon.

Par dispositif de restitution des données, on entend tout moyen apte à sauvegarder, analyser et/ou restituer les données acquises par le dispositif de pipetage. Un tel dispositif peut, par exemple, être un ordinateur indépendant, un ordinateur connecté à un automate d'analyse, l'automate d'analyse lui-même ou encore une imprimante.

Par moyen de traitement de données, on entend tout moyen doué d'intelligence artificielle, tel qu'un microcontrôleur ou un microprocesseur. A titre de microcontrôleur, on peut citer des composants du type DSP (Digital Signal Processor), FPGA (Field Programmable Gate Array) ou ASIC (Application Specific Integrated Circuit).

Par moyen de traitement de données délocalisé, on entend tout moyen de traitement de données disposés hors du dispositif de pipetage. Plus particulièrement, de tels moyens de traitement de données sont partie intégrante de dispositif de restitution de données, décrits ci-dessus.

Selon une variante avantageuse de l'invention, le dispositif de pipetage comporte en outre, au moins un moyen de stockage de données. Un tel moyen de stockage peut être constitué par tout moyen magnétique ou numérique, largement employé dans le domaine informatique et bien connu de l'homme du métier. Plus particulièrement, le moyen de stockage de données peut avantageusement être une mémoire non volatile du type EEPROM ou Flash, de sorte que les données contenues dans ledit moyen de stockage, ne sont pas effacées dans le cas où le dispositif de pipetage selon l'invention, n'est plus alimenté en énergie.

Selon un mode de réalisation particulier, le moyen de communication intégré dans le dispositif de pipetage selon l'invention, est un moyen de connexion filaire.

Par moyen de connexion filaire, on entend tout moyen permettant de connecter deux dispositifs électroniques entre eux, afin de permettre la transmission de données. En particulier, un moyen de connexion filaire peut être un système de connexion de type série (norme RS 485, RS 232), de type USB (*Universal Serial Bus*), de type réseau (Ethernet), de type parallèle (GPIB) ou tout autre moyen équivalent.

Selon une variante préférentielle de réalisation, le dispositif comporte un moyen de communication sans fil. Avantageusement, ce moyen de communication sans fil est un dispositif d'émission- réception d'ondes radioélectriques. Il peut s'agir par exemple d'un système Wifi (norme 802.11b), Bluetooth (norme 802.15) ou encore ZigBee (norme 802.15.4).

Un module Bluetooth adapté peut être celui commercialisé par la société National Semiconductor, sous la référence LMX9814 ou celui commercialisé par la société Socket Communications sous la référence Kwikblue SMD.

Un module ZigBee adapté peut être un de ceux commercialisés par la société Freescale Semiconductor, Inc, dans la série MC13.

Une alternative consiste à utiliser un moyen de transmission par infrarouges.

Le dispositif de pipetage selon l'invention peut également comporter au moins un moyen d'affichage d'informations. Ce moyen d'affichage d'informations peut être constitué par une ou plusieurs diodes électroluminescentes, dans sa version la plus simple. Selon ce mode de réalisation, les diodes peuvent fournir au manipulateur réalisant l'analyse, différentes informations, notamment liées à l'acquisition des données, l'identification du contenant dans lequel se trouve l'échantillon liquide ou destiné à le recevoir. Le moyen d'affichage d'informations est toutefois plus préférentiellement un écran à cristaux liquides.

Selon un mode préférentiel de réalisation du dispositif de pipetage selon l'invention, le moyen d'acquisition de données est un moyen d'acquisition d'images.

Par moyen d'acquisition d'images, on entend tout moyen apte à fournir une image de qualité suffisante pour pouvoir être analysée. Un tel moyen peut être par exemple un capteur opto-électronique du type CCD ou CMOS. Un tel moyen est généralement combiné à un moyen de mise en forme des données destiné à permettre leur prise en charge et leur transfert.

Selon une alternative, le moyen d'acquisition de données peut être un lecteur RFID (Radio Frequency Identification).

Selon un autre mode de réalisation préférentiel, le moyen de prélèvement - dispense de l'échantillon liquide dispose d'une capacité de prélèvement variable.

Par capacité de prélèvement variable, on entend une capacité de prélèvement pouvant être réglée à la demande.

Avantageusement, le moyen de prélèvement - dispense est de type seringue, comportant un corps et un piston, ledit piston étant mu par un moyen d'actionnement.

Par moyen d'actionnement, on entend tout moyen adapté pour mouvoir le piston de la seringue dans un mouvement translatif longitudinal à l'intérieur du corps de la seringue. Un tel moyen d'actionnement peut être par exemple un moyen électrique, électromagnétique, électropneumatique, ou tout autre moyen équivalent. Il peut s'agir avantageusement d'un moteur du type pas à pas.

Selon une autre variante de l'invention, le dispositif de pipetage selon l'invention peut comporter également un moyen de détermination de l'angle d'inclinaison dudit dispositif, lors de la mise en oeuvre dudit dispositif. Il peut s'agir, par exemple, d'un accéléromètre ou d'un gyroscope.

Préférentiellement, le dispositif selon l'invention comporte un compartiment de réception de l'échantillon liquide qui peut être désolidarisé dudit dispositif. Plus préférentiellement encore, ledit compartiment est un embout jetable.

Par embout jetable, on entend tout dispositif à usage unique, qui peut être adapté à l'extrémité d'un dispositif de pipetage afin de se retrouver en communication fluidique avec ce dernier. En particulier, un tel embout jetable se présente généralement sous la forme d'un réservoir de forme tronconique, en matériau plastique. Cet embout jetable peut être de capacité et de composition différentes selon l'utilisation prévue.

De façon préférentielle, le moyen d'alimentation du dispositif de pipetage selon l'invention est un moyen rechargeable du type batterie. Plus préférentiellement encore, cette batterie est de grande capacité pour permettre au dispositif de pipetage selon l'invention de fonctionner durant plusieurs heures sans être rechargé. Bien entendu, un support du dispositif de pipetage est avantageusement prévu avec chargeur de batterie intégré. Alternativement, le chargeur de batterie peut être indépendant du support du dispositif de pipetage.

Un autre objet de la présente invention concerne l'utilisation d'un dispositif de pipetage tel que défini ci-dessus, pour la réalisation d'une analyse d'un échantillon biologique.

Un autre objet de la présente invention concerne un procédé de prélèvement d'un échantillon liquide, disposé à l'intérieur d'un contenant source, à l'aide du dispositif de pipetage tel que défini ci-dessus, comportant les étapes consistant à :
a) acquérir les données d'identification disposées sur ledit contenant source, à l'aide du moyen d'acquisition de données et
b) prélever un volume déterminé d'échantillon liquide, à l'aide du moyen de prélèvement - dispense, de manière à ce que le volume d'échantillon prélevé se retrouve à l'intérieur du compartiment de réception de l'échantillon liquide.

Un autre objet de la présente invention concerne un procédé de dispense dans un contenant de destination, d'un échantillon liquide contenu dans le compartiment de réception de l'échantillon liquide du dispositif de pipetage, selon l'invention. Ledit procédé comporte les étapes consistant à :
a) acquérir les données d'identification disposées sur ledit contenant de destination, à l'aide du moyen d'acquisition de données et
b) dispenser dans ledit contenant de destination, tout ou partie du volume d'échantillon liquide contenu dans le compartiment de réception, à l'aide du moyen de prélèvement - dispense.

Selon une variante des procédés de prélèvement et de dispense décrits ci-dessus, les étapes a) et b) sont réalisées simultanément.

Selon une deuxième variante, des procédés de prélèvement et de dispense décrits ci-dessus, l'étape b) est réalisée préalablement à l'étape a).

Le procédé de prélèvement peut avantageusement comporter une étape supplémentaire d'identification du contenant source, consistant à :
- transmettre les données acquises au système de traitement des données et
- comparer les données transmises avec une base de données de référence, comportant des données d'identification;
ladite étape supplémentaire pouvant être réalisée avant ou après l'étape b) de prélèvement.

Selon une variante encore plus avantageuse, le procédé de prélèvement comporte une étape supplémentaire a') de validation de l'étape de prélèvement consistant à :
- transmettre les données acquises, au système de traitement des données,
- comparer les données transmises avec une base de données de référence, comportant des données d'identification, par l'intermédiaire du moyen de traitement des données et
- transmettre l'ordre de prélèvement au moyen de prélèvement - dispense, lorsque le contenant source a été correctement identifié.

De façon préférentielle, le volume d'échantillon liquide à prélever est déterminé par le moyen de traitement des données.

Selon une variante avantageuse, le procédé de dispense comporte une étape supplémentaire d'identification du contenant de destination, consistant à :
- transmettre les données acquises, au système de traitement des données et
- comparer les données transmises avec une base de données de référence, comportant des données d'identification;
ladite étape supplémentaire pouvant être réalisée avant ou après l'étape b) de dispense.

Selon une variante encore plus avantageuse, le procédé de dispense comporte une étape supplémentaire a') de validation de l'étape de dispense consistant à :
- transmettre les données acquises, au système de traitement des données,
- comparer les données transmises avec une base de données de référence, comportant des données d'identification, par l'intermédiaire du moyen de traitement des données et
- transmettre l'ordre de dispense au moyen de prélèvement - dispense, lorsque le contenant de destination a été correctement identifié.

De façon préférentielle, le volume d'échantillon liquide à dispenser est déterminé par le moyen de traitement des données.

Dans les procédés de prélèvement ou de dispense décrits ci-dessus, les étapes consistant à :
- transmettre les données acquises, au système de traitement des données,
- transmettre l'ordre de prélèvement au moyen de prélèvement - dispense, et/ou
- transmettre l'ordre de dispense au moyen de prélèvement - dispense,
sont préférentiellement réalisées par l'intermédiaire du moyen de communication, lorsque le moyen de traitement des données est délocalisé.

Enfin, un autre objet de la présente invention concerne un procédé d'analyse biologique qui comporte au moins une étape consistant dans le procédé de prélèvement et/ou au moins une étape consistant dans le procédé de dispense, tels que décrits ci-dessus.

Les buts et avantages de la présente invention seront mieux compris à la lumière de la description détaillée qui suit, faite en référence au dessin dans lequel :
La figure 1 représente un schéma, sous forme de blocs fonctionnels, du dispositif de pipetage selon un mode de réalisation particulier, fonctionnant en relation avec un automate d'analyse.
La figure 2 représente un schéma sous forme de blocs fonctionnels du logiciel associé au dispositif de pipetage selon l'invention.
La figure 3 représente l'organigramme d'un procédé de prélèvement d'un échantillon liquide, à l'aide du dispositif de pipetage selon l'invention.
La figure 4 représente l'organigramme d'un procédé de dispense d'un échantillon liquide, à l'aide du dispositif de pipetage selon l'invention.
La figure 5A représente une vue en perspective d'une cartouche d'analyse utilisée dans l'automate d'analyse VIDAS®
La figure 5B représente une vue agrandie d'une extrémité de la cartouche représentée à la figure 5A.

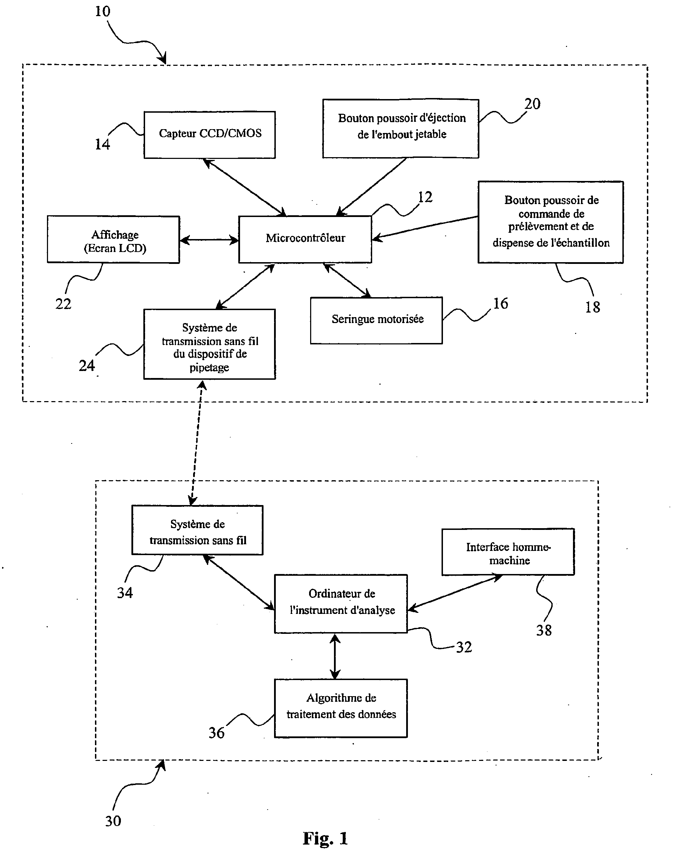

Un mode de réalisation du dispositif de pipetage est représenté à la figure 1 sous forme de blocs fonctionnels et relationnels. Selon ce mode de réalisation, le dispositif de pipetage 10 est connecté à un automate d'analyse 30. En effet, le dispositif de pipetage est sous le contrôle de l'automate d'analyse, pour les étapes de pipetage qui vont être réalisées par le manipulateur, préalablement à l'analyse ou éventuellement au cours de l'analyse réalisée par l'automate d'analyse.

Un tel automate d'analyse peut être, par exemple et de façon nullement limitative, l'automate d'immuno-essais VIDAS@ ou mini VIDAS@, commercialisés par la demanderesse.

Le dispositif de pipetage 10 est constitué principalement d'un microcontrôleur 12 dont la fonction est de traiter les données liées à l'analyse. Ainsi, ce microcontrôleur 12 permet la liaison entre tous les composants du dispositif de pipetage 10. Une autre fonction du microcontrôleur 12 est de traiter tout ou partie des données acquises par le moyen d'acquisition de données.

Dans le cas présent, le moyen d'acquisition de données est constitué par un capteur CCD ou CMOS 14. Ce capteur doit permettre l'acquisition d'images de qualité suffisante pour exploiter des identifiants, tels que des code-barres, des codes alphanumériques, des acronymes ou des codes-couleurs. Le capteur peut être partie intégrante d'une caméra. A ce titre, des produits adaptés peuvent être ceux commercialisés par les sociétés Vision Components (VCSBC50 intelligent OEM camera), I2S (OEM-D640) ou OVT (CMUcam2).

Le capteur est associé à un système optique (lentilles) pour couvrir le champ de vision nécessaire à la lecture des identifiants. Un tel système optique peut être avantageusement des lentilles optiques liquides à distance focale accordable électriquement, telles que celles commercialisées par la société Varioptic.

Un système d'éclairage peut être envisagé pour assurer un contraste suffisant et constant des photos acquises. Ainsi ce système peut être un système d'éclairage dans le visible, telle qu'une lampe-flash. Il peut s'agir également d'un système d'éclairage dans le non-visible, tel qu'un système infrarouge. Ce système d'éclairage peut fonctionner en continu durant la phase d'acquisition d'images ou en impulsion juste le temps de la prise d'image et ce afin de limiter la dépense d'énergie.

Le dispositif d'acquisition d'images peut être positionné sur le dispositif de pipetage en partie basse de ce dernier, de sorte que, lorsque le dispositif de pipetage est positionné dans le contenant source ou de destination à fin de prélèvement ou de dispense, il puisse être en mesure de capturer l'image du moyen d'identification, ou identifiant, disposé sur ledit contenant source ou de destination.

Selon une variante de réalisation, le dispositif de pipetage peut comporter plusieurs dispositifs d'acquisition d'images. Ainsi, outre le dispositif d'acquisition d'images décrit ci-dessus, un autre dispositif d'acquisition d'images peut être positionné dans la partie haute du dispositif de pipetage, au voisinage de la zone de préhension dudit dispositif, de sorte qu'il soit en mesure d'acquérir une image de l'identifiant d'un contenant positionné dans un plan sensiblement vertical, devant le dispositif de pipetage. En effet, un tel mode de réalisation peut faciliter l'identification de certains contenants dont les dimensions sont trop réduites pour permettre l'acquisition de l'image du moyen d'identification, lors de l'étape de prélèvement ou de dispense, lorsque le dispositif de pipetage est positionné en aplomb du contenant.

Outre ces dispositifs d'acquisition d'images, le dispositif de pipetage peut avantageusement être équipé en plus d'un dispositif de lecture de code-barres, lorsque le ou les dispositifs d'acquisition d'images n'offrent pas cette fonctionnalité. En effet, la reconnaissance de codes-barres par le biais d'un capteur, nécessite généralement que ce dernier présente des performances élevées pour que la reconnaissance puisse se faire dans de bonnes conditions. Ceci peut représenter un coût important. Auquel cas, il peut être préférable d'utiliser un dispositif de lecteur de codes-barres traditionnel pour effectuer cette tâche, le ou les capteur(s) embarqué(s) pour l'acquisition d'images pouvant alors présenter des performances moindres et donc être moins onéreux.

Un autre organe du dispositif de pipetage, piloté électroniquement par le microcontrôleur 12, est la seringue motorisée 14. Une telle seringue peut être par exemple du type de celles commercialisées par la société Biohit, sous la marque eLINE®. A cette seringue est ajoutée l'embout jetable qui joue le rôle de compartiment de réception de l'échantillon liquide. Lorsque le dispositif de pipetage est utilisé dans une étape de prélèvement, le microcontrôleur transmet les ordres à la pipette quant au volume d'échantillon à prélever. De même, lorsque le dispositif de pipetage est utilisé dans une étape de dispense, à savoir lorsque l'embout jetable contient l'échantillon liquide prélevé, le microcontrôleur transmet les ordres à la pipette quant au volume d'échantillon à dispenser. Il est rappelé que les volumes prélevés et dispensés peuvent varier selon les informations transmises par le microcontrôleur. De même, la capacité de la pipette motorisée peut varier. En effet, la société Biohit commercialise des pipettes eLINE®, dont la capacité de prélèvement peut aller de 0,1 à 5000 µl, selon les modèles.

La pipette motorisée, quant à elle, est en mesure de transmettre au microcontrôleur des informations concernant son état de fonctionnement, tel que la position du piston, l'état des fins de course ou des informations liées aux détecteurs de pression différentielle décrit ci-après. Avantageusement, il est possible de disposer sur la pipette motorisée, d'un moyen de contrôle du volume de liquide contenu dans l'embout jetable ou de bouchage dudit embout jetable. Un tel moyen est constitué par un tube en communication, par l'une de ses extrémités, avec l'environnement intérieur de l'embout et est connecté, par l'autre extrémité, à un détecteur de pression différentielle. Un tel détecteur est alors en mesure de fournir un signal au microcontrôleur correspondant à un changement de pression à l'intérieur de l'embout jetable dû au remplissage ou au vidage dudit embout ou éventuellement au bouchage de ce dernier.

Dans le mode de réalisation décrit sur la figure 1, certains des éléments constitutifs du dispositif de pipetage ont essentiellement pour fonction de jouer le rôle d'intermédiaire entre le dispositif de pipetage et le manipulateur, en ce qui concerne les ordres donnés par ce dernier. Ces éléments sont le bouton poussoir 18 de commande de prélèvement et de dispense de l'échantillon et le bouton d'éjection de l'embout jetable 20.

Les étapes de prélèvement et de dispense de l'échantillon sont avantageusement commandées grâce à un seul bouton poussoir 18. Alternativement, le dispositif de pipetage selon l'invention dispose de deux boutons poussoirs de commande : un pour commander le prélèvement et un pour commander la dispense. Ce ou ces boutons poussoirs sont également en liaison avec le microcontrôleur puisque toute pression sur ce ou ces boutons est reconnue par le microcontrôleur qui donne alors l'ordre à la pipette motorisée 16 de réaliser un mouvement de prélèvement ou d'expulsion

Le bouton poussoir d'éjection de l'embout jetable 20 est également connecté au microcontrôleur. Il s'ensuit que lorsque le manipulateur appuie sur ce bouton poussoir, le microcontrôleur donne l'ordre à la pipette motorisée 16 d'éjecter l'embout jetable. Si par cette action, le microcontrôleur enregistre que l'embout jetable a bien été éjecté, ceci ne constitue nullement une procédure suffisante pour s'assurer que l'embout éjecté a bien été jeté et ne va pas être réutilisé.

Selon une alternative de l'invention, le dispositif de pipetage comporte un unique bouton poussoir, destiné à commander le prélèvement, la dispense et l'éjection de l'embout jetable. Cette alternative est envisageable dans la mesure où le microcontrôleur est capable de déterminer à chaque instant le stade d'avancement de la procédure de pipetage. Ainsi, lorsque l'ordre de prélèvement de l'échantillon a été donné par le microcontrôleur à la pipette motorisée, une nouvelle pression sur le bouton poussoir par le manipulateur est interprétée par le microcontrôleur comme un ordre de dispense de tout ou partie de l'échantillon contenu dans l'embout jetable. De même, lorsque l'opération ou les opérations de dispense prévues ont été effectuées, une nouvelle pression sur le bouton poussoir par le manipulateur est interprétée par le microcontrôleur comme un ordre d'éjection de l'embout jetable.

Un mode de réalisation alternatif consiste à disposer d'un bouton poussoir d'éjection mécanique, non commandé par le microcontrôleur.

Selon un mode particulier de réalisation, il peut donc être envisagé que la pipette motorisée dispose d'un moyen d'assurer la traçabilité de l'embout jetable. Pour cela, on peut mettre en place un système de discrimination entre les embouts jetables neufs et ceux usagés, de sorte que lorsqu'un embout jetable neuf doit être utilisé et que ce n'est pas le cas, la pipette motorisée en informe.le microcontrôleur, qui à son tour, en informe le manipulateur par des moyens appropriés.

Un autre élément constitutif du dispositif de pipetage décrit sur la figure 1, concerne le dispositif d'affichage 22. Selon un mode préférentiel de réalisation, ce dispositif d'affichage est constitué par un écran à cristaux liquides, qui présente l'avantage d'être peu encombrant. Ce dispositif d'affichage 22 permet de communiquer à l'utilisateur des informations sur les opérations de pipetage en cours telles que l'identification de l'échantillon prélevé, l'identification du contenant destination, les alarmes éventuelles telles que celle liée à l'utilisation d'un embout usagé. Il peut également permettre au manipulateur de vérifier un cliché pris par l'intermédiaire du capteur 14. Le dispositif d'affichage 22 est géré par le microcontrôleur 12 auquel il est connecté.

Enfin, le dernier élément constituant le dispositif de pipetage 10 décrit à la figure 1 est le système de transmission sans fil 24. Ce mode de transmission de données représente un mode préférentiel de réalisation. En effet, selon ce mode de réalisation, le dispositif de pipetage selon l'invention est connecté à l'automate d'analyse 30, plus particulièrement à l'ordinateur 32 dudit automate 30. Un tel mode de réalisation permet d'assurer une traçabilité continue et totale des étapes de l'analyse réalisées directement par le manipulateur à l'aide du dispositif de pipetage et des étapes réalisées par l'automate. Il est ainsi avantageux que l'automate d'analyse soit informé par le dispositif de pipetage d'erreurs commises par le manipulateur lors des opérations de pipetage.

Le système de transmission sans fil du dispositif de pipetage 10 est relié au dispositif de transmission sans fil 34 de l'ordinateur 32 de l'automate d'analyse 30 et permet ainsi la connexion entre le dispositif de pipetage 10 et ce dernier.

Ce dispositif de transmission sans fil 34 peut être de manière préférentielle, une carte réseau Wifi (norme 802.11b), Bluetooth (norme 802.15) ou ZigBee (norme 802.15.4), connectée à la carte mère de l'ordinateur 32.

Selon une alternative à ce mode de transmission, il est également possible de connecter le dispositif de pipetage 10 à l'automate grâce à un moyen de transfert de données filaire. Un tel moyen de transfert filaire a déjà été décrit ci-dessus.

Grâce à ce système de transmission de données, l'ordinateur 32 est en mesure de traiter les données transmises par le dispositif de pipetage. Tout ou partie de ces données sont traitées par l'algorithme de traitement des données 36, notamment en terme d'identification des échantillons et des contenants, gestion des erreurs, progression des étapes de prélèvement et de dispense dans le procédé d'analyse. Une partie des données d'identification traitées par l'algorithme de traitement 36 est fournie au manipulateur par l'intermédiaire de l'interface homme - machine (IHM) 38. Cette interface permet au manipulateur de suivre la progression de l'analyse. C'est également par ce biais que l'automate d'analyse fournit au manipulateur les instructions opératoires. En cas d'erreur de manipulation, cette interface permet aussi de fournir au manipulateur les informations nécessaires.

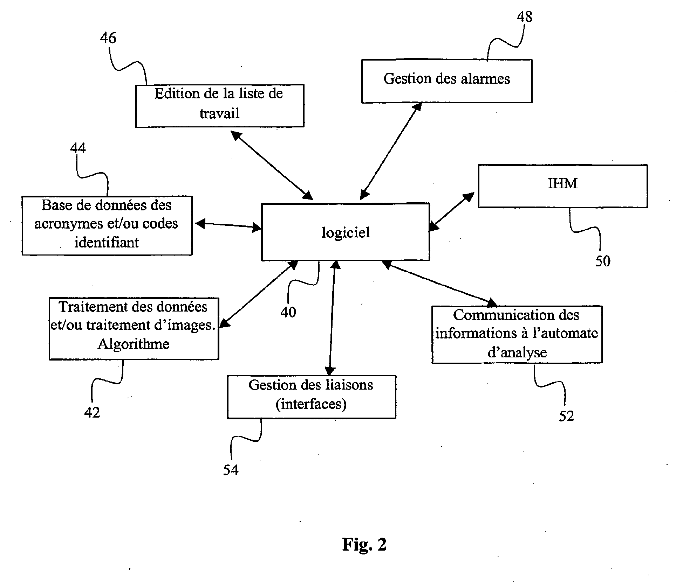

La figure 2 montre l'architecture du logiciel permettant de faire fonctionner le dispositif de pipetage. Comme on peut le voir, le logiciel 40 développé spécifiquement pour le dispositif de pipetage, permet le traitement des données ou les traitements des images par l'intermédiaire de l'algorithme développé à cette fin. Il permet également la gestion de la base de données 44 des acronymes et/ ou des codes d'identification, tels que les code-barres, les étiquettes RFID, les codes alphanumériques ou les codes-couleurs, qui est utilisée pour l'identification des données acquises par le dispositif de pipetage.

En effet, lorsque le manipulateur réalise une acquisition de données ou d'images à l'aide du dispositif de pipetage, ces données et/ou cette image sont prises en charge par le microcontrôleur et transmises à l'automate d'analyse. Le logiciel compare alors les données et/ou image obtenues du dispositif d'analyse avec également la base de données 44 des acronymes et/ ou des codes d'identification. Il comporte en outre un module 46 d'édition de la liste de travail, qui est spécifique à chaque analyse. Il comporte de plus un module 48 de gestion des différentes alarmes destinées à prévenir le manipulateur de tout problème tel qu'une mauvaise manipulation, la non-reconnaissance de l'identifiant d'un contenant, l'utilisation d'un mauvais contenant, etc... Un module important de ce logiciel est l'interface homme-machine (IHM) 50, qui constitue le trait d'union entre le manipulateur et le dispositif de pipetage et/ou l'ordinateur de l'automate d'analyse. Un autre module très important est constitué par le module de liaison à l'automate d'analyse (52), qui assure le lien entre ce dernier et le dispositif de pipetage. Enfin, le dernier module du logiciel concerne la gestion des interfaces. Ce dernier module permet d'assurer la liaison des différents modules cités précédemment, en adaptant en particulier leur protocole de communication.

L'algorithme de traitement de données 36 et la base de données 44 des acronymes et/ ou des codes d'identification peuvent être mis à jour par l'utilisateur. En effet, il important de pouvoir adjoindre à l'algorithme de nouvelles fonctionnalités, liées à l'évolution des services que doit rendre le dispositif de pipetage. De même, la base de données des acronymes et/ ou des codes d'identification doit également pouvoir être incrémentée si de nouveaux moyens d'identification viennent à être utilisés.

Dans le cas où l'algorithme de traitement des données et la base de données des acronymes et/ ou des codes d'identification sont chargés dans la mémoire du dispositif de pipetage, leur mise à jour s'effectue par le biais de l'ordinateur 32, via le système de transmission de données filaire ou sans fil.

Par ailleurs, il est à noter que la base de données des acronymes et/ ou des codes d'identification peut être créée de toute pièce ou incrémentée à l'aide du dispositif de pipetage lui-même. En effet, dans ce cas, l'acquisition des données telle que la prise d'images, est effectuée grâce au(x) dispositif(s) d'acquisition de données du dispositif de pipetage. Ainsi, il est avantageux d'acquérir plusieurs images des acronymes et/ ou des codes d'identification, selon plusieurs angles d'inclinaison du dispositif de pipetage. La base de données des acronymes et/ ou des codes d'identification comporte alors pour un même acronyme ou code d'identification, plusieurs images destinées à être utilisées comme données de référence et comparées avec l'image acquise lors de l'utilisation du dispositif de pipetage.

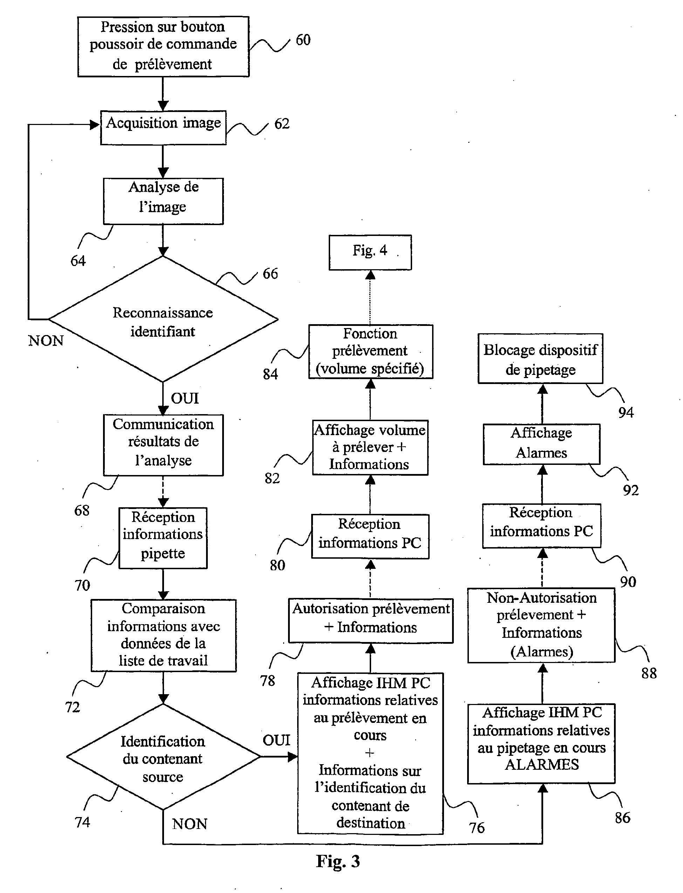

Les différentes étapes du procédé de prélèvement d'un échantillon liquide avec le dispositif de pipetage selon l'invention sont présentées sur la figure 3. Lorsque le manipulateur démarre le processus de prélèvement, il positionne le dispositif de pipetage dans le contenant source de l'échantillon à prélever. A l'étape 60, il appuie alors sur le bouton poussoir de commande de prélèvement. Il s'ensuit que le dispositif d'acquisition d'images prend alors une photo du moyen d'identification du contenant source. L'image acquise est mise en mémoire à l'étape 62. Cet enregistrement est réalisé directement dans le dispositif de pipetage si celui-ci dispose d'un moyen de stockage ou dans la mémoire de l'ordinateur de l'automate d'analyse. L'image est analysée à l'étape 64. Si le dispositif de pipetage dispose d'un microcontrôleur apte à effectuer l'analyse de l'image, celui-ci tente alors de reconnaître l'identifiant, se trouvant sur l'image à l'étape 66. Par exemple, si l'image est celle d'un code-barres, le microcontrôleur tente de reconnaître la valeur associée au code-barres. A ce stade, soit le microcontrôleur reconnaît l'identifiant et la valeur correspondante est mise en mémoire, soit le microcontrôleur ne reconnaît pas l'identifiant et dans ce cas, l'ordre est donné au dispositif d'acquisition d'images de prendre une nouvelle photo pour reconnaissance de l'identifiant, conformément à l'étape 62. L'image précédemment prise est alors supprimée.

Ces étapes nécessaires à la reconnaissance de l'identifiant peuvent être reproduites autant de fois que nécessaires. Toutefois, il peut être avantageusement prévu de déterminer un nombre limité de tentatives de reconnaissance de l'identifiant. Le nombre de tentatives peut également être limité par limitation du temps alloué à la reconnaissance de l'identifiant. Il importe dans tous les cas, que la fréquence d'acquisition soit élevée, c'est à dire que le temps nécessaire à l'acquisition de l'image et le temps nécessaire au traitement des données, soient les plus réduits possibles.

Le dispositif de pipetage doit être en mesure d'offrir un taux de reconnaissance des moyens d'identification élevé. Par ailleurs, dans le cas où la reconnaissance des moyens d'identification est impossible, le dispositif est en mesure de déterminer la cause de cette non-reconnaissance et ce, par l'intermédiaire de l'algorithme de traitement des données. Les erreurs empêchant la reconnaissance des moyens d'identification sont :
- une inclinaison excessive du dispositif de pipetage, de sorte que l'image acquise se trouve être exagérément déformée ;
- un mauvais éclairage ambiant (surexposition ou sous-exposition) de sorte que les contrastes sont trop importants ou trop faibles ;
- le moyen d'identification illisible, dû par exemple au fait que le moyen d'identification est détérioré ou caché ;
- le moyen d'identification hors du champ de lecture du moyen d'acquisition d'images.

Afin d'améliorer le processus de reconnaissance des moyens d'identification, il peut être avantageux d'intégrer au dispositif de pipetage, un accéléromètre ou un gyroscope. Il peut s'agir par exemple de l'accéléromètre référencé MMA7260Q et commercialisé par la société Freescale Semiconductor, Inc. En effet, un tel dispositif permet de déterminer l'angle d'inclinaison du dispositif de pipetage, concomitamment à l'acquisition d'image. De ce fait, l'image acquise est automatiquement liée à la mesure d'inclinaison réalisée. Ainsi, lors de la comparaison des données, l'image acquise n'est comparée qu'avec des images auxquelles est liée une valeur d'inclinaison du dispositif de pipetage équivalente. Ceci permet d'accélérer sensiblement l'étape de reconnaissance de l'identifiant, dans la mesure où seules les données pertinentes, contenues dans la base de données de référence, sont prises en compte.

Dans le cas où l'identifiant n'est pas reconnu, il est demandé au manipulateur d'effectuer les opérations correctives nécessaires Ces corrections sont demandées par l'intermédiaire de l'IHM. Une fois les corrections effectuées, le manipulateur démarre une nouvelle procédure de prélèvement dans le contenant source. Si cette dernière s'avère infructueuse de par la non-identification du contenant source, le manipulateur dispose alors de la possibilité de passer en mode non-assisté et non contrôlé du dispositif de pipetage. Ce mode consiste à isoler la partie mécanique du dispositif de pipetage de toute servitude de contrôle. Autrement dit, le dispositif de pipetage devient alors une simple pipette motorisée. Dans ce cas, l'information du passage dans ce mode «dégradé » est enregistrée dans l'ordinateur de l'automate d'analyse dans un souci de traçabilité. Alternativement, cette information peut être enregistrée dans le dispositif de pipetage lui-même, si ce dernier dispose du moyen de stockage adéquat.

Lorsque l'identifiant est correctement reconnu, la valeur correspondante est transmise à l'ordinateur de l'automate d'analyse via le système de transmission sans fil du dispositif de pipetage, durant l'étape 68. Les données sont alors reçues par le système de transmission sans fil de l'ordinateur de l'automate d'analyse, à l'étape 70. A l'étape 72, l'ordinateur compare alors les données reçues avec celles contenues dans la liste de travail. Ces informations sauvegardées par le manipulateur dans l'ordinateur, préalablement à l'analyse concernent toutes les données relatives à l'analyse à réaliser, telles que par exemple l'analyte à rechercher dans l'échantillon, les réactifs à utiliser au cours de l'analyse, les volumes de réactifs ou d'échantillon à prélever et dispenser, les données liées à l'identification des patients pour qui l'analyse doit être réalisée.

Deux cas de figure peuvent alors se produirent à l'étape 74 : soit le résultat de la comparaison à l'étape précédente, permet d'identifier le contenant source, c'est à dire que la valeur obtenue à partir de l'image prise par le dispositif d'acquisition d'images a pu être corrélée aux informations contenues dans la liste de travail ; soit le résultat de la comparaison ne permet pas d'identifier le contenant source, à savoir que la valeur obtenue à partir de l'image prise par le dispositif d'acquisition d'images n'a pu être corrélée à aucune information contenue dans la liste de travail.

Dans le cas où le contenant source est identifié comme étant en adéquation avec l'analyse réalisée, l'ordinateur de l'automate d'analyse fournit au manipulateur des informations au moyen de l'interface homme - machine, à létape 76. Ces informations sont liées notamment au prélèvement à réaliser, tel que par exemple le volume de l'échantillon à prélever dans le contenant source. D'autres informations fournies au manipulateur par l'intermédiaire de l'interface homme - machine peuvent concerner le contenant de destination, afin de guider le manipulateur pour l'étape de dispense. A l'étape 78, l'ordinateur de l'automate d'analyse transmet l'autorisation de prélèvement et les informations correspondantes telles que le volume à prélever au dispositif de pipetage par le biais de son système de transmission sans fil. Une fois ces informations reçues par le système de transmission sans fil du dispositif de pipetage à l'étape 80, elles sont affichées sur l'écran du dispositif de pipetage à l'étape 82. Il est notamment possible de rappeler au manipulateur le volume qui va être prélevé. Le dispositif de pipetage prélève alors dans le contenant source le volume spécifié, à l'étape 84.

Dans le cas où le contenant source n'est pas identifié ou dans le cas où il est identifié mais considéré comme non conforme avec l'analyse en cours, l'ordinateur en informe le manipulateur par l'intermédiaire de l'interface homme - machine, à l'étape 86. Des alarmes sont également activées afin de s'assurer que le manipulateur a bien été alerté. A l'étape 88, l'ordinateur de l'automate d'analyse transmet alors au dispositif de pipetage par le biais de son système de transmission sans fil, l'interdiction de prélèvement et les informations correspondantes telles que les alarmes devant être activées sur ledit dispositif; données qui sont réceptionnées à l'étape 90 par le système de transmission sans fil du dispositif de pipetage. Ce dernier prend alors le relais de l'ordinateur de l'automate d'analyse pour afficher les alarmes à l'étape 92, puis le blocage dudit automate d'analyse intervient à l'étape 94.

Le manipulateur doit alors prendre les mesures correctives pour que le procédé de prélèvement soit en adéquation avec les informations contenues dans la liste de travail, tel que le changement du contenant source si ce dernier n'est pas le bon.

Selon une alternative de ce procédé de prélèvement, il est possible que la reconnaissance de l'identifiant soit réalisée directement par l'ordinateur de l'automate d'analyse. Dans ce cas, l'image brute est transmise par le dispositif de pipetage à l'ordinateur via leur système de transmission sans fil respectif. Les étapes d'analyse de l'image et de reconnaissance de l'identifiant sont alors réalisées au sein de l'ordinateur de l'automate d'analyse. Dans le cas où l'identifiant est reconnu, la valeur correspondante est comparée à la liste de travail, conformément à l'étape 72 du procédé décrit ci-dessus. Les étapes qui suivent sont alors identiques à celles décrites ci-dessus. Par contre, si l'identifiant n'est pas reconnu, l'ordinateur transmet au dispositif de pipetage l'ordre d'effectuer une nouvelle prise de vue. Le procédé redémarre alors à l'étape d'acquisition de l'image. Les mêmes limites que celles données au dispositif de pipetage, en terme de nombre de prises de vue ou de durée allouée à cette étape, peuvent être données à l'ordinateur de l'automate d'analyse.

Une fois le volume spécifié prélevé par le dispositif de pipetage, le manipulateur peut être invité par l'ordinateur de l'automate d'analyse à réaliser l'étape suivante de l'analyse, à savoir la dispense de échantillon. Ainsi, des informations sur le ou les contenant(s) de destination de l'échantillon prélevé peuvent être fournies au manipulateur par l'intermédiaire de l'interface homme - machine.

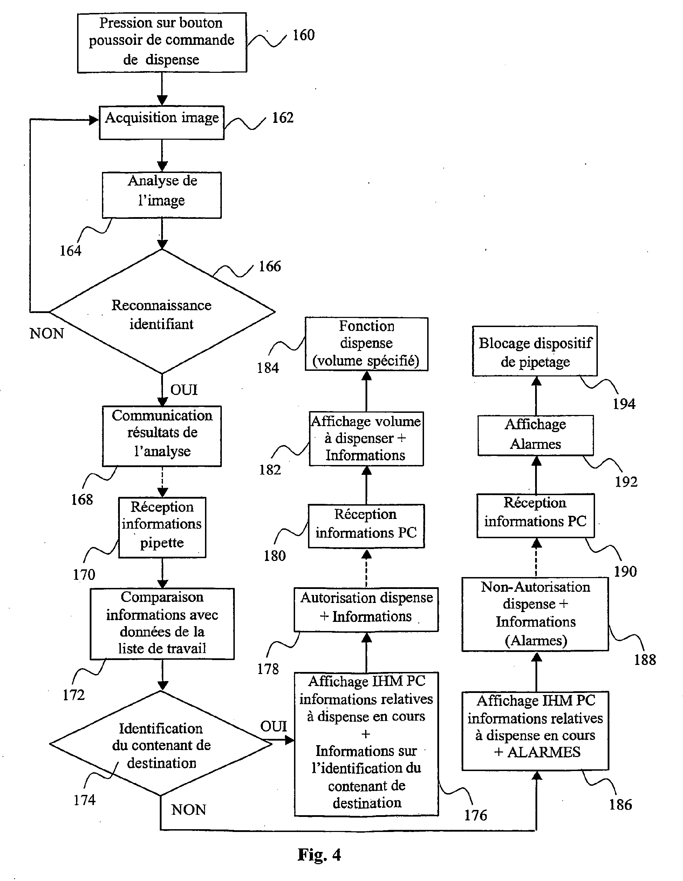

La ou les étapes de dispense peuvent alors se dérouler conformément à la figure 4.

Lorsque le manipulateur démarre le processus de dispense, il positionne le dispositif de pipetage dans le contenant de destination de l'échantillon à dispenser ou un des contenants si le volume prélevé doit être dispensé dans plusieurs contenants de destination (réalisation d'aliquotes ou de plusieurs analyses en parallèle). A l'étape 160, il appuie alors sur le bouton poussoir de commande de dispense qui peut être le même bouton que le bouton poussoir de commande de prélèvement ou un autre bouton poussoir. Il s'ensuit la prise d'un cliché du contenant de destination, par le dispositif d'acquisition d'images, au niveau du moyen d'identification dudit contenant de destination. L'image acquise est mise en mémoire à l'étape 162. Cet enregistrement est réalisé directement dans le dispositif de pipetage si celui-ci dispose d'un moyen de stockage ou dans la mémoire de l'ordinateur de l'automate d'analyse. L'image est analysée à l'étape 164. Le microcontrôleur du dispositif de pipetage tente alors de reconnaître l'identifiant, se trouvant sur l'image à l'étape 166. Par exemple, si l'image est celle d'un code-barres, le microcontrôleur tente de reconnaître la valeur associée au code-barres. L'identifiant peut être également un acronyme ou un code alphanumérique. Selon une troisième variante, l'identifiant peut être un code couleur.

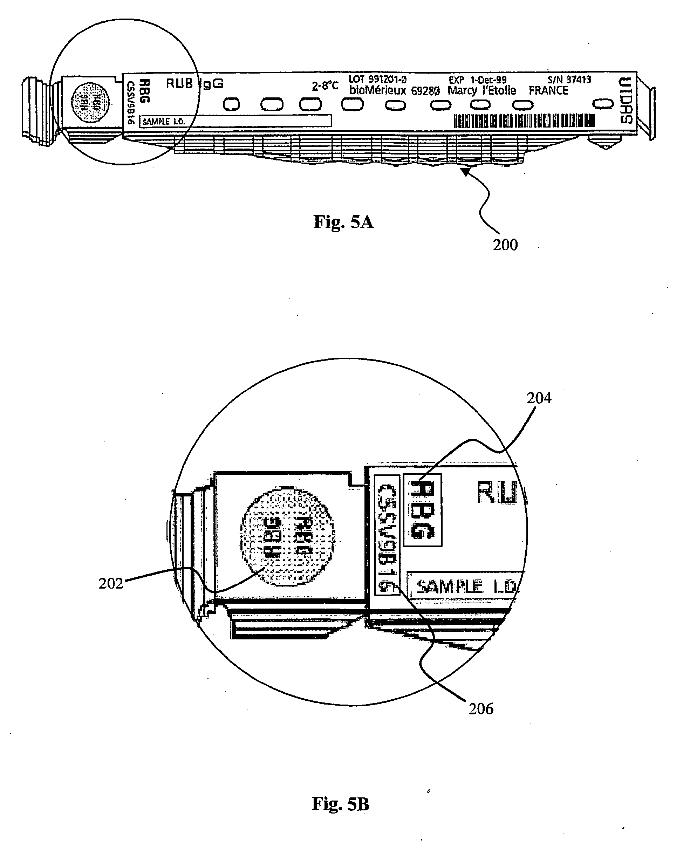

Ainsi, si l'automate d'analyse est un VIDAS®, le contenant de destination est constitué par un consommable comportant une cartouche avec plusieurs réservoirs destinés à l'analyse. Une telle cartouche est représentée à la figure 5A, sous la référence 200. Une vue en agrandissement de l'une des extrémités de la cartouche, représentée à la figure 5B montre les différents éléments permettant l'identification de ladite cartouche. Ainsi, on constate que la cartouche 200 comporte tout d'abord une pastille 202, généralement de couleur déterminée, portant l'acronyme correspondant à l'analyse que permet de réaliser ladite cartouche. On remarque que cet acronyme 204 est repris sur la cartouche dans une taille plus importante et en format noir sur blanc, afin de faciliter sa lecture. Enfin, la cartouche comporte en outre un code alphanumérique 206, qui est le code unique permettant d'identifier chaque cartouche. Lorsque le manipulateur dispense l'échantillon dans ladite cartouche grâce au dispositif de pipetage, il est essentiel que ce dernier puisse s'assurer que la dispense se fait dans la bonne cartouche, à savoir la cartouche correspondant à l'analyse voulue. De plus, il est important de pouvoir acquérir les données d'identification de la cartouche elle-même.

A ce stade, soit le microcontrôleur reconnaît l'identifiant et la valeur correspondante est mise en mémoire, soit le microcontrôleur ne reconnaît pas l'identifiant et dans ce cas, l'ordre est donné au dispositif d'acquisition d'images de prendre une nouvelle photo pour reconnaissance de l'identifiant, conformément à l'étape 162. Dans le cas où le contenant est une cartouche VIDAS@, le dispositif de pipetage doit être en mesure de reconnaître au moins un des deux identifiants de l'analyse réalisée avec la cartouche (code couleur ou acronyme), ainsi que l'identifiant de la cartouche elle-même (code alphanumérique). Il doit être également en mesure de déterminer quel est le puits de la cartouche dans lequel est positionné le dispositif de pipetage.

Ces étapes nécessaires à la reconnaissance de l'identifiant peuvent être également reproduites autant de fois que nécessaires. Toutefois, il sera là également avantageux de prévoir une limitation du nombre de tentatives de reconnaissance de l'identifiant ou du temps alloué à la reconnaissance de l'identifiant. Il importe également, que la fréquence d'acquisition soit élevée, c'est à dire que le temps nécessaire à l'acquisition de l'image et le temps nécessaire au traitement des données, soient les plus réduits possibles.

Dans le cas où l'identifiant n'est pas reconnu, il est demandé au manipulateur d'effectuer les opérations correctives nécessaires Ces corrections sont demandées par l'intermédiaire de l'IHM. Une fois les corrections effectuées, le manipulateur démarre une nouvelle procédure de dispense dans le contenant de destination. Si cette dernière s'avère infructueuse de par la non identification du contenant source, le manipulateur dispose alors de la possibilité de passer en mode non-assisté et non contrôlé du dispositif de pipetage. Dans ce cas, l'information du passage dans ce mode « dégradé » est enregistrée dans l'ordinateur de l'automate d'analyse. Alternativement, cette information peut être enregistrée dans le dispositif de pipetage lui-même, si ce dernier dispose du moyen de stockage adéquat.

Lorsque l'identifiant est correctement reconnu, la valeur correspondante est transmise à l'ordinateur de l'automate d'analyse via le système de transmission sans fil du dispositif de pipetage, durant l'étape 168. Les données sont alors reçues par le système de transmission sans fil de l'ordinateur de l'automate d'analyse, à l'étape 170. A l'étape 172, l'ordinateur compare alors les données reçues avec celles contenues dans la liste de travail.

Deux cas de figure peuvent alors se produire à l'étape 174 : soit le résultat de la comparaison à l'étape précédente, permet d'identifier le contenant de destination, c'est à dire que la valeur obtenue à partir de l'image prise par le dispositif d'acquisition d'images a pu être corrélée aux informations contenues dans la liste de travail ; soit le résultat de la comparaison ne permet pas d'identifier le contenant de destination, à savoir que la valeur obtenue à partir de l'image prise par le dispositif d'acquisition d'images n'a pu être corrélée à aucune information contenue dans la liste de travail.

Dans le cas où le contenant de destination est identifié comme étant en adéquation avec l'analyse réalisée, l'ordinateur de l'automate d'analyse fournit au manipulateur des informations grâce à l'interface homme - machine, à l'étape 176. Ces informations concernent notamment le volume de l'échantillon à dispenser dans le contenant de destination. A l'étape 178, l'ordinateur de l'automate d'analyse transmet l'autorisation de dispense et les informations correspondantes telles que le volume à dispenser au dispositif de pipetage par le biais de son système de transmission sans fil. Une fois ces informations reçues par le système de transmission sans fil du dispositif de pipetage à l'étape 180, elles sont affichées sur l'écran du dispositif de pipetage à l'étape 182. Il est notamment possible de rappeler au manipulateur le volume qui va être dispensé. Le dispositif de pipetage dispense alors dans le contenant de destination le volume spécifié, à l'étape 184.

Dans le cas où le contenant de destination n'est pas identifié ou dans le cas où il est identifié mais considéré comme non conforme avec l'analyse en cours ou l'étape de l'analyse en cours, l'ordinateur en informe le manipulateur par l'intermédiaire de l'interface homme - machine, à l'étape 186. Des alarmes sont également activées, afin de s'assurer que le manipulateur a bien été alerté. A l'étape 188, l'ordinateur de l'automate d'analyse transmet alors au dispositif de pipetage par le biais de son système de transmission sans fil, l'interdiction de dispense et les informations correspondantes telles que les alarmes devant être activées sur ledit dispositif. Données qui sont réceptionnées à l'étape 190 par le système de transmission sans fil du dispositif de pipetage. Ce dernier prend alors le relais de l'ordinateur de l'automate d'analyse pour afficher les alarmes à l'étape 192, puis le blocage dudit automate d'analyse intervient à l'étape 194.

Le manipulateur doit alors prendre les mesures correctives pour que le procédé de dispense soit en adéquation avec les informations contenues dans la liste de travail.

Selon une alternative de ce procédé de dispense et de manière analogue au procédé de prélèvement décrit ci-dessus, la reconnaissance de l'identifiant peut être réalisée directement par l'ordinateur de l'automate d'analyse.

Selon une variante du procédé de dispense spécifique au VIDAS@, le dispositif de pipetage doit être en mesure d'identifier non seulement le contenant de destination constitué par la cartouche VIDAS@, mais également le cône VIDAS@ également spécifique de l'analyse à réaliser et constituant le support de la réaction immunologique et permettant le prélèvement des réactifs contenus dans la cartouche. En effet, cette double identification doit permettre de s'assurer que la cartouche et le cône, disposé en aplomb de ladite cartouche, sont bien concordants.

Selon une autre variante de l'invention, les étapes d'analyse d'images et de reconnaissance d'identifiants, mais également d'identification des contenants par comparaison avec la liste de travail peuvent être réalisées directement par le dispositif de pipetage. Dans ce cas, bon nombre des fonctions nécessaires à cette identification sont chargées dans le dispositif de pipetage. Ainsi, le logiciel permettant de faire fonctionner le dispositif de pipetage, la liste de travail, l'algorithme de traitement des données et/ou des images, la base de données des acronymes et/ou codes identifiant sont chargées dans la mémoire du dispositif de pipetage qui doit être d'une capacité et d'une rapidité suffisantes pour assurer le bon fonctionnement du dispositif. Le système de transmission entre le dispositif de pipetage et l'automate d'analyse n'a alors pour fonction que de permettre le transfert d'informations une fois le processus d'identification finalisé et le prélèvement ou la dispense effectué, de sorte que l'automate peut démarrer ou poursuivre l'analyse de l'échantillon. Par ailleurs, les informations inhérentes au prélèvement ou à la dispense sont stockées dans l'automate d'analyse ou l'ordinateur de ce dernier aux fins de traçabilité.

Il ressort de la description réalisée ci-dessus, que le dispositif de pipetage selon l'invention permet de s'assurer de la traçabilité totale des opérations réalisées au cours d'une analyse. Cette traçabilité totale ne limite pas pour autant la polyvalence du dispositif de pipetage selon l'invention.

En effet, il peut être utilisé dans le seul but de sauvegarder les informations de pipetage (prélèvement et dispense), sans influer sur ces étapes de pipetage. Dans ce cas, le manipulateur ne sera pas guidé durant la réalisation de l'analyse. Par contre, en cas d'erreurs lors de cette analyse, il sera possible de se reporter aux données sauvegardées afin d'identifier l'étape durant laquelle l'erreur a été commise.

Il peut être également utilisé en « tout automatique ». Dans ce cas, toutes les étapes de pipetage sont préalablement validées par le dispositif de pipetage lui-même ou l'ordinateur de l'automate d'analyse, auquel il est associé. Ainsi, en cas d'erreur, l'étape de prélèvement ou de dispense est rendue impossible, jusqu'à ce qu'une action corrective soit réalisée.

## Revendications

1. Dispositif de pipetage automatique (10) d'un échantillon liquide, comportant essentiellement :
a) au moins un moyen de prélèvement - dispense (16) de l'échantillon liquide,
b) au moins un compartiment de réception de l'échantillon liquide, destiné à recevoir tout ou partie de l'échantillon liquide prélevé par ledit moyen de prélèvement - dispense ;
c) au moins un moyen d'acquisition de données (14) ;
d) au moins un moyen de traitement (12, 32) des données intégré dans ledit dispositif de pipetage ou délocalisé, apte à traiter les données acquises par le moyen d'acquisition de données ;
e) au moins un moyen de communication entre le dispositif de pipetage et un dispositif de restitution des données, ledit moyen de communication étant apte à transférer les données entre ledit moyen d'acquisition de données et ledit moyen de traitement (12, 32) des données, lorsque ce dernier est délocalisé ; et
f) au moins un moyen d'alimentation en énergie ;
ledit dispositif étant **caractérisé en ce que** le moyen d'acquisition de données (14) est un moyen d'identification de l'échantillon liquide et/ou du ou des contenant(s) destiné(s) à recevoir tout ou partie dudit échantillon liquide.

2. Dispositif selon la revendication 1, qui comporte en outre un moyen de stockage des données.

3. Dispositif selon l'une des revendications précédentes, dans lequel le moyen de communication est un moyen de connexion filaire.

4. Dispositif selon l'une des revendications 1 à 2, dans lequel le moyen de communication est un moyen de transmission sans fil (24, 34).

5. Dispositif selon la revendication précédente, dans lequel ledit moyen de transmission sans fil est un dispositif d'émission- réception d'ondes radioélectriques.

6. Dispositif selon l'une des revendications précédentes, qui comporte en outre au moins un moyen d'affichage d'informations (22).

7. Dispositif selon la revendication précédente, dans lequel le moyen d'affichage d'informations est un écran à cristaux liquides.

8. Dispositif selon l'une des revendications précédentes, dans lequel le moyen d'acquisition de données (14) est un moyen d'acquisition d'images.

9. Dispositif selon l'une des revendications précédentes, dans lequel le moyen de prélèvement - dispense (16) de l'échantillon liquide dispose d'une capacité de prélèvement variable.

10. Dispositif selon la revendication précédente, dans lequel le moyen de prélèvement - dispense (16) est de type seringue, comportant un corps et un piston, ledit piston étant mu par un moyen d'actionnement.

11. Dispositif selon l'une des revendications précédentes, comportant en outre un moyen de détermination de l'angle d'inclinaison dudit dispositif, lors de la mise en oeuvre dudit dispositif.

12. Dispositif selon la revendication précédente, dans lequel le moyen de détermination de l'angle d'inclinaison dudit dispositif est un accéléromètre ou un gyroscope.

13. Utilisation d'un dispositif de pipetage selon l'une des revendications 1 à 12, pour la réalisation d'une analyse d'un échantillon biologique.

14. Procédé de prélèvement d'un échantillon liquide disposé à l'intérieur d'un contenant source, à l'aide du dispositif de pipetage selon l'une des revendications 1 à 12, comportant les étapes consistant à :
a) acquérir les données d'identification disposées sur ledit contenant source, à l'aide du moyen d'acquisition de données et
b) prélever un volume déterminé d'échantillon liquide, à l'aide du moyen de prélèvement - dispense, de manière à ce que le volume d'échantillon prélevé se retrouve à l'intérieur du compartiment de réception de l'échantillon liquide.

15. Procédé de dispense dans un contenant de destination, d'un échantillon liquide contenu dans le compartiment de réception de l'échantillon liquide du dispositif de pipetage, selon l'une des revendications 1 à 12, comportant les étapes consistant à :
a) acquérir les données d'identification disposées sur ledit contenant de destination, à l'aide du moyen d'acquisition de données et
b) dispenser dans ledit contenant de destination, tout ou partie du volume d'échantillon liquide contenu dans le compartiment de réception, à l'aide du moyen de prélèvement - dispense.

16. Procédé selon la revendication 14 ou 15, dans lequel les étapes a) et b) sont réalisées simultanément.

17. Procédé selon la revendication 14 ou 15, dans lequel l'étape b) est réalisée préalablement à l'étape a).

18. Procédé selon la revendication 14, comportant une étape supplémentaire d'identification du contenant source, consistant à :
• transmettre les données acquises, au système de traitement des données et
• comparer les données transmises avec une base de données de référence, comportant des données d'identification;
ladite étape supplémentaire pouvant être réalisée avant ou après l'étape b) de prélèvement.

19. Procédé selon la revendication 14, comportant une étape intermédiaire supplémentaire a') de validation de l'étape de prélèvement consistant à :
• transmettre les données acquises, au système de traitement des données,
• comparer les données transmises avec une base de données de référence, comportant des données d'identification, par l'intermédiaire du moyen de traitement des données et
• transmettre l'ordre de prélèvement au moyen de prélèvement - dispense, lorsque le contenant source a été correctement identifié.

20. Procédé selon la revendication précédente, dans lequel le volume d'échantillon liquide à prélever est déterminé par le moyen de traitement des données.

21. Procédé selon la revendication 15, comportant une étape supplémentaire d'identification du contenant de destination, consistant à :
• transmettre les données acquises, au système de traitement des données et
• comparer les données transmises avec une base de données de référence, comportant des données d'identification;
ladite étape supplémentaire pouvant être réalisée avant ou après l'étape b) de dispense.

22. Procédé selon la revendication 15, comportant une étape supplémentaire a') de validation de l'étape de dispense consistant à :
• transmettre les données acquises, au système de traitement des données ,
• comparer les données transmises avec une base de données de référence, comportant des données d'identification, par l'intermédiaire du moyen de traitement des données et
• transmettre l'ordre de dispense au moyen de prélèvement - dispense, lorsque le contenant de destination a été correctement identifié.

23. Procédé selon la revendication précédente, dans lequel le volume d'échantillon liquide à dispenser est déterminé par le moyen de traitement des données.

24. Procédé selon l'une des revendications 18 à 23, dans lequel les étapes consistant à :
- transmettre les données acquises, au système de traitement des données,
- transmettre l'ordre de prélèvement au moyen de prélèvement - dispense, et/ou
- transmettre l'ordre de dispense au moyen de prélèvement - dispense,
sont réalisées par l'intermédiaire du moyen de communication, lorsque le moyen de traitement des données est délocalisé.

25. Procédé d'analyse biologique comportant au moins une étape consistant dans le procédé de prélèvement et/ou au moins une étape consistant dans le procédé de dispense, selon l'une des revendications 14 à 24.

## Claims

1. An automatic pipetting device (10) for a liquid specimen, essentially comprising:
a) at least one means (16) for sampling-dispensing the liquid specimen;
b) at least one compartment for receiving the liquid specimen, intended to receive all or part of the liquid specimen sampled by said sampling-dispensing means;
c) at least one data acquisition means (14);
d) at least one data processing means (12, 32) integrated within said pipetting device or delocalized, able to process the data acquired by the data acquisition means;
e) at least one means for communication between the pipetting device and a data retrieval device, said communication means being able to transfer the data between said data acquisition means and said data processing means (12, 32), when the latter is delocalized; and
f) at least one power supply means;
said device being **characterized in that** the data acquisition means (14) is a means for identifying the liquid specimen and/or the container or containers intended to receive all or part of said liquid specimen.

2. The device as claimed in claim 1, which furthermore comprises a data storage means.

3. The device as claimed in one of the preceding claims, in which the communication means is a wire-based connection means.

4. The device as claimed in one of claims 1 to 2, in which the communication means is a wireless transmission means (24, 34).

5. The device as claimed in the preceding claim, in which said wireless transmission means is a device for sending-receiving radioelectric waves.

6. The device as claimed in one of the preceding claims, which furthermore comprises at least one information display means (22).

7. The device as claimed in the preceding claim, in which the information display means is a liquid crystal screen.

8. The device as claimed in one of the preceding claims, in which the data acquisition means (14) is an image acquisition means.

9. The device as claimed in one of the preceding claims, in which the means (16) for sampling-dispensing the liquid specimen has a variable sampling capacity.

10. The device as claimed in the preceding claim, in which the sampling-dispensing means (16) is of syringe type, comprising a body and a piston, said piston being propelled by an actuation means.

11. The device as claimed in one of the preceding claims, furthermore comprising a means for determining the angle of inclination of said device, during the implementation of said device.

12. The device as claimed in the preceding claim, in which the means for determining the angle of inclination of said device is an accelerometer or a gyroscope.

13. The use of a pipetting device as claimed in one of claims 1 to 12, for carrying out an analysis of a biological specimen.

14. A method for sampling a liquid specimen disposed inside a source container, with the aid of the pipetting device as claimed in one of claims I to 12, comprising the steps consisting in:
a) acquiring the identification data disposed on said source container, with the aid of the data acquisition means; and
b) sampling a determined volume of liquid specimen, with the aid of the sampling-dispensing means, in such a way that the volume of specimen sampled lies inside the compartment for receiving the liquid specimen.

15. A method of dispensing into a destination container, a liquid specimen contained in the compartment for receiving the liquid specimen of the pipetting device, as claimed in one of Claims 1 to 12, comprising the steps consisting in:
a) acquiring the identification data disposed on said destination container, with the aid of the data acquisition means; and
b) dispensing into said destination container, all or some of the volume of liquid specimen contained in the reception compartment, with the aid of the sampling-dispensing means.

16. The method as claimed in claim 14 or 15, in which steps a) and b) are carried out simultaneously.

17. The method as claimed in claim 14 or 15, in which step b) is carried out prior to step a).

18. The method as claimed in claim 14, comprising an additional step of identifying the source container, consisting in:
- transmitting the data acquired to the data processing systems and
- comparing the transmitted data with a reference database, comprising identification data;
said additional step being able to be carried out before or after the sampling step b).

19. The method as claimed in claim 14, comprising an additional intermediate step a') of validating the sampling step consisting in:
- transmitting the data acquired to the data processing system,
- comparing the transmitted data with a reference database, comprising identification data, by way of the data processing means, and
- transmitting the sampling order to the sampling-dispensing means, when the source container has been correctly identified.

20. The method as claimed in the preceding claim, in which the volume of liquid specimen to be sampled is determined by the data processing means.

21. The method as claimed in claim 15, comprising an additional step of identifying the destination container, consisting in:
- transmitting the data acquired to the data processing system; and
- comparing the transmitted data with a reference database, comprising identification data;
said additional step being able to be carried out before or after the dispensing step b).

22. The method as claimed in claim 15, comprising an additional step a') of validating the dispensing step consisting in:
- transmitting the data acquired to the data processing system,
- comparing the transmitted data with a reference database, comprising identification data, by way of the data processing means, and
- transmitting the dispensing order to the sampling-dispensing means, when the destination container has been correctly identified.

23. The method as claimed in the preceding claim, in which the volume of liquid specimen to be dispensed is determined by the data processing means.

24. The method as claimed in one of claims 18 to 23, in which the steps consisting in:
- transmitting the data acquired to the data processing system,
- transmitting the sampling order to the sampling-dispensing means, and/or
- transmitting the dispensing order to the sampling-dispensing means,
are carried out by way of the communication means, when the data processing means is delocalized.

25. A method of biological analysis comprising at least one step consisting in the sampling method and/or at least one step consisting in the dispensing method, as claimed in one of claims 14 to 24.

## Patentansprüche

1. Automatische Pipettiervorrichtung (10) für eine flüssige probe, im Wesentlichen umfassend:
a) mindestens ein Entnahme-Spendemittel (16) der flüssigen probe,
b) mindestens ein Aufnahmeabteil für die flüssige probe, das dazu bestimmt ist, die Gesamtheit oder einen Teil der vom Entnahme-Spendemittel entnommenen flüssigen Probe aufzunehmen;
c) mindestens ein Datenerfassungsmittel (14);
d) mindestens ein Datenverarbeitungsmittel (12, 32), das in die Pipettiervorrichtung integriert oder ausgelagert ist und die vom Datenerfassungsmittel erfassten Daten verarbeiten kann;
e) mindestens ein Verbindungsmittel zwischen der Pipettiervorrichtung und einer Datenausgabevorrichtung, wobei das Verbindungsmittel die Daten zwischen dem Datenerfassungsmittel und dem Datenverarbeitungsmittel (12, 32) übertragen kann, wenn dieses Letztgenannte ausgelagert ist; und
f) mindestens ein Stromversorgungsmittel;
wobei die Vorrichtung **dadurch gekennzeichnet ist, dass** das Datenerfassungsmittel (14) ein Mittel zur Identifikation der flüssigen Probe und/oder des oder der Behälter(s) ist, der (die) dazu bestimmt ist (sind), die Gesamtheit oder einen Teil der flüssigen Probe aufzunehmen.

2. Vorrichtung nach Anspruch 1, die ferner ein Datenspeichermittel umfasst.

3. Vorrichtung nach einem der vorhergehenden Ansprüche, bei der das Verbindungsmittel ein Drahtanschlussmittel ist.

4. Vorrichtung nach einem der Ansprüche 1 bis 2, bei der das Verbindungsmittel ein drahtloses Übertragungsmittel (24, 34) ist.

5. Vorrichtung nach dem vorhergehenden Anspruch, bei der das drahtlose Übertragungsmittel eine Sende-Empfangsvorrichtung von radioelektrischen Wellen ist.

6. Vorrichtung nach einem der vorhergehenden Ansprüche, die ferner mindestens ein Informationsanzeigemittel (22) umfasst.

7. Vorrichtung nach dem vorhergehenden Anspruch, bei der das Informationsanzeigemittel ein Flüssigkristallbildschirm ist.

8. Vorrichtung nach einem der vorhergehenden Ansprüche, bei der das Datenerfassungsmittel (14) ein Bilderfassungsmittel ist.

9. Vorrichtung nach einem der vorhergehenden Ansprüche, bei der das Entnahme-Spendemittel (16) der flüssigen probe über eine variable Entnahmekapazität verfügt.

10. Vorrichtung nach dem vorhergehenden Anspruch, bei der das Entnahme-Spendemittel (16) vom Typ Spritze ist, umfassend einen Körper und einen Kolben, wobei der Kolben von einem Betätigungsmittel bewegt wird.

11. Vorrichtung nach einem der vorhergehenden Ansprüche, ferner umfassend ein Mittel zur Bestimmung des Neigungswinkels der Vorrichtung beim Einsatz der Vorrichtung.

12. Vorrichtung nach dem vorhergehenden Anspruch, bei der das Mittel zur Bestimmung des Neigungswinkels der Vorrichtung ein Beschleunigungsmesser oder ein Gyroskop ist.

13. Verwendung einer Pipettiervorrichtung nach einem der Ansprüche 1 bis 12 für die Durchführung einer Analyse einer biologischen Probe.

14. Verfahren zur Entnahme einer flüssigen probe, die sich im Inneren eines Ausgangsbehälters befindet, mit Hilfe der Pipettiervorrichtung nach einem der Ansprüche 1 bis 12, umfassend die folgenden Schritte, darin bestehend:
a) die Identifikationsdaten, die auf dem Ausgangsbehälter vorhanden sind, mit Hilfe des Datenerfassungsmittels zu erfassen, und
b) ein bestimmtes Volumen einer flüssigen Probe mit Hilfe des Entnahme-Spendemittels zu entnehmen, so dass das entnommene Probenvolumen wieder im Inneren des Aufnahmeabteils der flüssigen Probe enthalten ist.

15. Verfahren zum Spenden in einen Bestimmungsbehälter einer flüssigen probe, die in dem Aufnahmeabteil für die flüssige probe der Pipettiervorrichtung enthalten ist, nach einem der Ansprüche 1 bis 12, umfassend die folgenden Schritte, darin bestehend:
a) die Identifikationsdaten, die auf dem Bestimmungsbehälter vorgesehen sind, mit Hilfe des Datenerfassungsmittels zu erfassen und
b) in den Bestimmungsbehälter der Gesamtheit oder eines Teils des Volumens der flüssigen Probe, das in dem Aufnahmeabteil enthalten ist, mit Hilfe des Entnahme-Spendemittels zu spenden.

16. Verfahren nach Anspruch 14 oder 15, bei dem die Schritte a) und b) gleichzeitig erfolgen.

17. Verfahren nach Anspruch 14 oder 15, bei dem der Schritt b) vor dem Schritt a) erfolgt.

18. Verfahren nach Anspruch 14, umfassend einen zusätzlichen Schritt der Identifizierung des Ausgangsbehälters, darin bestehend:
- die erfassten Daten an das Datenverarbeitungssystem zu übertragen, und
- die übertragenen Daten mit einer Referenzdatenbasis zu vergleichen, die Identifikationsdaten umfasst;
wobei der zusätzliche Schritt vor oder nach dem Schritt b) der Entnahme erfolgen kann.

19. Verfahren nach Anspruch 14, umfassend einen zusätzlichen Zwischenschritt a') der Validierung des Entnahmeschritts, darin bestehend:
- die erfassten Daten an das Datenverarbeitungssystem zu übertragen,
- die übertragenen Daten mit einer Referenzdatenbasis, die Identifikationsdaten umfasst, mit Hilfe des Datenverarbeitungsmittels zu vergleichen, und
- den Entnahmebefehl an das Entnahme-Spendemittel zu übertragen, wenn der Ausgangsbehälter richtig identifiziert wurde.

20. Verfahren nach dem vorhergehenden Anspruch, bei dem das Volumen der zu entnehmenden Flüssigkeitsprobe durch das Datenverarbeitungsmittel bestimmt wird.

21. Verfahren nach Anspruch 15, umfassend einen zusätzlichen Schritt der Identifizierung des Bestimmungsbehälters, darin bestehend:
- die erfassten Daten an das Datenverarbeitungssystem zu übertragen, und
- die übertragenen Daten mit einer Referenzdatenbasis zu vergleichen, die Identifikationsdaten umfasst;
wobei der zusätzliche Schritt vor oder nach dem Schritt b) des Spendens erfolgen kann.

22. Verfahren nach Anspruch 15, umfassend einen zusätzlichen Schritt a') der Validierung des Spendeschritts, darin bestehend:
- die erfassten Daten an das Datenverarbeitungssystem zu übertragen,
- die übertragenen Daten mit einer Referenzdatenbasis, die Identifikationsdaten umfasst, mit Hilfe des Datenverarbeitungsmittels zu vergleichen, und
- den Spendebefehl an das Entnahme-Spendemittel zu übertragen, wenn der Bestimmungsbehälter richtig identifiziert wurde.

23. Verfahren nach dem vorhergehenden Anspruch, bei dem das Volumen der zu spendenden flüssigen probe durch das Datenverarbeitungsmittel bestimmt wird.

24. Verfahren nach einem der Ansprüche 18 bis 23, bei dem die Schritte, die darin bestehen:
- die erfassten Daten an das Datenverarbeitungssystem zu übertragen,
- den Entnahmebefehl an das Entnahme-Spendemittel zu übertragen, und/oder
- den Spendebefehl an das Entnahme-Spendemittel zu übertragen,
mit Hilfe des Verbindungsmittels durchgeführt werden, wenn das Datenverarbeitungsmittel ausgelagert ist.

25. Biologisches Analyseverfahren, umfassend mindestens einen Schritt, der in dem Entnahmeverfahren besteht, und/oder mindestens einem Schritt, der in dem Spendeverfahren besteht, nach einem der Ansprüche 14 bis 24.
